# EUROPEAN PATENT APPLICATION

(11) **EP 4 428 109 A1**
(43) Date of publication of application: **11.09.2024**
(21) Application number: 23160408.3
(22) Date of filing: 07.03.2023
(51) Int. Cl.: C04B 28/00, C04B 18/14

(54) **ALKALI ACTIVATED CRYSTALLINE BOF-SLAG/POZZOLAN BLEND**

(71) Applicant: Heidelberg Materials AG, 69120 Heidelberg (DE)
(72) Inventor: SCHADE, Tim, 69120 Heidelberg (DE); BOLTE, Gerd, 69120 Heidelberg (DE); DIENEMANN, Wolfgang, 69120 Heidelberg (DE)
(74) Representative: Zellentin & Partner mbB Patentanwälte

(57) **Abstract**

Alkali activated binder comprising an aluminosilicate precursor and an activator, wherein the aluminosilicate precursor comprises a blend comprising from 10 to 50 wt.-% of a slag, which has an X-ray amorphous content below 50 wt.-% and a free lime content from 1 to 10 wt.-% with respect to the slag, and from 50 to 90 wt.-% of a natural pozzolan and/or a natural tempered pozzolan, which has an amorphous content of at least 30 wt.-% with respect to the natural pozzolan and/or natural tempered pozzolan, and the activator has a modulus ≤ 3 and is an alkali silicate or a mixture of an alkali silicate and an alkali hydroxide.

## Description

The present invention relates to an alkali activated binder, a method for its manufacturing and its use for manufacturing precast concrete elements as well as a method for manufacturing precast concrete elements with it.

Resources are becoming increasingly scarce and the cement industry is looking for ways to use materials from waste streams as binders. For example, slags and fly ashes have been used for a long time as supplementary cementitious material (abbreviated SCM). Granulated blast furnace slags and calcareous fly ashes also showed good performance when used as aluminosilicate precursor for alkali activated binders and as geopolymer precursor material. The use of an alkali activator to produce so-called alkali activated binder (abbreviated AAB) is one way to activate waste material and to develop CO₂-saving materials. In order for the alkalis and hydration products to precipitate promptly, a glassy state is preferable. A disadvantage of currently developed alkali activated binders is the need to use high quality SCM as aluminosilicate precursor. This limits the potential for producing composite cements characterized by a high clinker replacement ratio from those SCM. In addition, the amount of granulated blast furnace slag (abbreviated GBFS) and calcareous fly ash will decline rapidly in the near future due to the decarbonization of the industry. In contrast, natural pozzolans (P) and naturally tempered pozzolans (Q) are available worldwide, but only react with the activation of portlandite from cement hydration.

Air-cooled basic oxygen furnace slags (abbreviated BOF-slags) are currently mainly landfilled or partly used in road construction as aggregates. Due to their crystalline state, they are not reactive. They do not hydrate to strengthgiving hydration products and are not considered SCM. In some cases, the high free lime content leads to an undesirable immediate setting behavior or lowering of the volume stability.

It is known that slags can be used as part of an alkali activated binder. Also the alkaline activation of a pozzolan in combination with GBFS has been evaluated in the following literature:
- Najimi, M.: Alkali-activated natural pozzolan/slag binder for sustainable concrete. PHD-thesis, University of Nevada, Las Vegas, 2016
- Robayo, R.A., Mejia de Gutiérrez, R., Gordillo, M.: Natural pozzolan-and granulated blast furnace slag-based binary geopolymers. Materiales de Construcción, Vol. 66, 2016. http://dx.doi.org/10.3989/mc.2016.03615
- Nadoushan, M.J., Ramezanianpour, A.A.: The effect of type and concentration of activators on flowability and compressive strength of natural pozzolan and slag-based geopolymers. Constr. And Build. Mat. 111 (2016), 337-347
- Allahverdi, A., Kani, E.N., Yazdanipour, M.: Effects of blast-furnace slag on natural pozzolan-based geopolymer cement. Ceramics - Silikáty 55(1) (2011), 68-78.

These studies conclude that a combination of slag and pozzolan is beneficial in AAB, except the earliest one by A. Allahverdi et al. which found no benefit. According to the later studies and also suspected by the earliest study itself the lacking effect could be attributed to a too high crystallinity of the slag. Thus, BOF-slags with their high crystallinity seem inappropriate for AAB, both on their own and as blend with pozzolans. Therefore, the objects remain to find a beneficial use for BOF-slags and other crystalline slags on the one hand and to reduce carbon dioxide emissions of construction, especially of binder manufacturing, on the other hand. T. Mashifana and N. Sithole, "Utilization of fly ash: basic oxygen furnace slag as a raw material in geopolymerization", doi:10.1088/1757-899X/652/1/012060, describe experiments to determine the optimum fly ash/BOF slag ratio, concentration of NaOH as activator, solid:liquid ratio and curing temperature for use of BOF slag - fly ash blends as AAB. The achieved maximum 6 day strength at 80 °C remains low, only 10 MPa. Information about the crystallinity of the BOF slag or its free lime content are not provided. The obtained results indicate a low free lime content and a low amorphous content.

It was now surprisingly found that crystalline BOF-slag with an appreciable free lime content blended with a natural pozzolan and/or natural tempered pozzolan forms a high performance AAB, especially when curing takes place at elevated temperature. Such AAB show properties, especially workability and strength development, that allow a complete clinker replacement, in principle comparable to the effect found for AAB systems mainly based on amorphous GBFS or on fly ash or on blends of GBFS and fly ash.

Thus, the above objects are solved by an alkali activated binder comprising an aluminosilicate precursor and an activator, wherein the aluminosilicate precursor comprises a blend comprising from 10 to 50 wt.-% of a slag, which has an X-ray amorphous content below 50 wt.-% and a free lime content from 1 to 10 wt.-% with respect to the slag, and from 50 to 90 wt.-% of a natural pozzolan and/or a natural tempered pozzolan, which has/have an amorphous content of at least 30 wt.-% with respect to the pozzolan, and the activator is an alkali silicate or a mixture of an alkali silicate and an alkali hydroxide with a modulus ≤ 3. The objects are further solved by a method for manufacturing an alkali activated binder comprising an aluminosilicate precursor and an activator, wherein the method comprises the steps of providing the aluminosilicate precursor by blending from 10 to 50 wt.-% of a slag, which has an X-ray amorphous content below 50 wt.-% and a free lime content from 1 to 10 wt.-% with respect to the slag, with from 50 to 90 wt.-% of a natural pozzolan and/or a natural tempered pozzolan, which has/have an amorphous content of at least 30 wt.-% with respect to the natural pozzolan and/or natural tempered pozzolan, and providing an alkali silicate or a mixture of an alkali silicate and an alkali hydroxide with a modulus ≤ 3 as the activator. The objects are still further achieved by a use of an alkali activated binder comprising an aluminosilicate precursor and an activator, wherein the aluminosilicate precursor comprises a blend comprising from 10 to 50 wt.-% of a slag, which has an X-ray amorphous content below 50 wt.-% and a free lime content from 1 to 10 wt.-% with respect to the slag, and from 50 to 90 wt.-% of a natural pozzolan and/or a natural tempered pozzolan, which has/have an amorphous content of at least 30 wt.-% with respect to the natural pozzolan and/or natural tempered pozzolan, and the activator has a modulus ≤ 3 and is an alkali silicate or a mixture of an alkali silicate and an alkali hydroxide, for manufacturing precast concrete elements wherein the alkali activated binder is mixed with aggregate and water to form a concrete, the concrete is filled into a mold where it hardens to form the precast concrete element and the precast concrete element is demolded. Furthermore, the objects are achieved by a method for manufacturing precast concrete elements comprising providing an alkali activated binder comprising an aluminosilicate precursor and an activator, obtained by blending from 10 to 50 wt.-% of a slag, which has an X-ray amorphous content below 50 wt.-% and a free lime content from 1 to 10 wt.-% with respect to the slag, and from 50 to 90 wt.-% of a natural pozzolan and/or a natural tempered pozzolan, which has/have an amorphous content of at least 30 wt.-% with respect to the natural pozzolan and/or natural tempered pozzolan, as the aluminosilicate precursor and providing an alkali silicate or a mixture of an alkali silicate and an alkali hydroxide with a modulus ≤ 3 as the activator, mixing the alkali activated binder with aggregate and water to form a concrete, filling the concrete into a mold where it hardens to form the precast concrete element and demolding the precast concrete element.

Herein, alkali activated binder designates inorganic binders synthesized from source materials rich in silicates and aluminates termed aluminosilicate precursor. Like the classical cements hardening by hydraulic reaction, they can be mixed to a pourable paste. However, the strength developing process results from a chemical reaction of silica and alumina under alkaline conditions and the hardened product is an amorphous three-dimensional crosslinked aluminosilicate polymer structure. Due to this, AAB are often designated geopolymers, but this designation should only be used for AAB with low CaO in the source material.

In order to obtain the three-dimensional crosslinked aluminosilicate polymer structure, the silicates and aluminates have to be provided by an appropriate choice of raw materials. Common aluminosilicate precursors are e.g., siliceous fly ash, calcareous fly ash, granulated blast furnace slag, silica fume, and kaolinite. The reactivity of the raw materials, that significantly influences the final performance of the binder, originates from intrinsic material properties, such as volume fraction of reactive glassy phase, chemical composition of glassy phase, free lime content, unburned carbon and reactive surface. A high volume fraction of glassy phase is beneficial for the binder reactivity due to its high solubility. Additionally, the chemical composition determines the reactivity: The higher the CaO content, the higher is the reactivity. Un-burned carbon increases the demand for activator and water, which negatively influences the binder performance and costs. Finally, the higher the reactive surface, the higher is the solubility of the source material.

The activator provides high pH conditions in order to corrode the glassy structures of the alumino-silicates in the source material. Additionally, it can contribute silica and alkali oxide supporting the formation of the hardened three-dimensional crosslinked aluminosilicate polymer structure. The activator can be composed of different compounds, often mixtures are used:
- alkali and/or alkaline earth metal silicates, e.g., sodium or potassium silicate, sodium metasilicate anhydrous or pentahydrate
- alkali and/or alkaline earth metal hydroxides, e.g., sodium hydroxide, calcium hydroxide, potassium hydroxide
- alkali and/or alkaline earth metal carbonates, e.g., sodium carbonate
- Portland cement.

The alkaline activator can be added as a liquid or as a solid compound. In the solid state the activator is preferably ground together with the alumino-silicate source(s) in order to enhance reactivity. In many cases a simple mixing of the dry components is sufficient.

When aluminosilicate precursors like ground granulated blast-furnace slag and calcareous fly ash are used which contain high amounts of CaO, hydration processes comparable to classical cements are initiated in alkali activated binders based on them. Besides the three-dimensional crosslinked aluminosilicate polymer structure, inter alia calcium silicate hydrates and calcium aluminate hydrates or calcium silicate aluminate hydrates are formed. The water consuming hydration process increases the pH level of the pore solution and consequently the rate of dissolution. Thus, the presence of calcium contributes to the mechanical strength of the resulting hardened matrix not only by forming C-S-H, C-A-H and C-A-S-H but also by enhancing the polymerization process.

The mix design of alkali activated binders is complex, several key material parameters have to be considered, namely the type of aluminosilicate precursor (high/low CaO), the activator content and the SiO₂/M₂O-ratio (M = alkali metal ion) of the activator, called modulus. Additionally, the water/binder ratio and curing temperature have a substantial influence.

Supplementary cementitious materials are typical aluminosilicate precursors. SCM is defined herein as a pozzolanic and/or latent hydraulic material. Latent hydraulic materials have a composition that allows hydraulic reaction upon contact with water, wherein an activator is needed to enable hardening within technically feasible times. Activator means a substance that accelerates the hardening of latent hydraulic materials. It can be an addition like sulfate or calcium (hydr)oxide and/or products of the hydraulic reaction of the ground clinker, e.g. calcium silicates liberate calcium hydroxide during hardening. Pozzolanic materials are characterized by a content of reactive silica and/or alumina which form strength providing calcium silicate hydrates and calcium aluminate hydrates, respectively, during hydration of the clinker together with the calcium hydroxides liberated. In practice the limit between latent hydraulic and pozzolanic materials is not well defined, for example fly ashes can be both latent hydraulic and pozzolanic depending on their calcium oxide content. Consequently, the term SCM designates both latent hydraulic as well as pozzolanic materials. However, not reactive or only slightly reactive materials like limestone that substantially do not take part in the hydraulic reactivity have to be clearly differentiated from SCM, with which they are sometimes summarized as mineral additions.

According to the invention a crystalline slag, specifically BOF-slag, is used in combination with a natural pozzolan and/or natural tempered pozzolan as aluminosilicate precursor of an alkali activated binder. The activator is either an alkali silicate or a mixture comprising an alkali silicate and an alkali hydroxide. Such AAB show adequate workability and strength development, i.e. perform similar to Portland cements (abbreviated OPC). Since the components are partly derived from alternative material sources and need no heating or only moderate heating in the case of tempered pozzolans they save natural resources, avoid waste depositing and compared to OPC substantially reduce the carbon dioxide footprint of the binder.

The AAB according to the invention or obtained according to the invention comprises an aluminosilicate precursor and an activator as is usual for AAB. However, a specific blend of slag and natural pozzolan and/or natural tempered pozzolan is used as aluminosilicate precursor and specific activators are foreseen.

The aluminosilicate precursor is a blend comprising a slag with an amorphous content below 50 wt.-% and a free lime content from 1 to 10 wt.-% with respect to the slag. Preferred are mainly crystalline BOF-slags from basic oxygen steelmaking. Such slags typically have X-ray amorphous contents below 50 wt.-%, often below 40 wt.-% or below 30 wt.-%. Also other slags with a low content of X-ray amorphous component(s) are suitable. When blast furnace slag is cooled slowly instead of quenching it in air or water, its X-ray amorphous content can be well below the 66 wt.-% limit required by standards for an SCM use. Such slags are very useful as blend component of the aluminosilicate precursor. A mixture of two or more slags can be used. Using mixtures of different slags can help to maintain a similar composition or adjust a desired composition of the slag. Further, slags from one source can have a composition varying over time, so storing them to mix charges and minimize composition variation might be desirable.

The free lime content of the slag ranges from 1 to 10 wt.-%, preferably from 3 to 8 wt.-%, and most preferred from 5 to 7 wt.-% with respect to the total slag weight measured by X-ray diffraction (XRD).

Further, suitable slags typically have a basicity B1 from 1.38 to 22.64, a basicity B2 from 1.55 to 16.22, a basicity B3 from 1.08 to 3.17, and a basicity B4 from 0.65 to 20.27, wherein the basicities are defined by the following mass ratios of the slag components calculated as oxides

B1= CaO/SiO₂

B2 = (CaO+MgO)/SiO₂

B3 = (CaO+MgO)/(SiO₂+Al₂O₃)

B4 = CaO/Fe₂O₃.

The particle size distribution (abbreviated PSD) of the slag particles should usually have a d90 < 250 µm, preferably a d90 < 200 µm and most preferred a d90 < 150 µm. PSD with sizes of the particles mainly below 1 or 2 mm are measured by laser diffraction particle size analyzer.

The natural pozzolan (abbreviated P) and/or natural tempered pozzolan (abbreviated Q) can be any known P and/or Q, preferred are P. It is possible to use mixtures of two or more pozzolans as natural pozzolan and/or natural tempered pozzolan. Typical natural pozzolans are ashes of volcanic origin or sedimentary clays and shales. Typical natural tempered pozzolans are calcined clays or calcined dredged sediments.

The X-ray amorphous content of the natural pozzolan and/or natural tempered pozzolan is > 30 wt.-%, preferably > 45 wt.-% and most preferred > 60 wt.-%, with respect to the total pozzolan weight. The PSD of the natural pozzolan and/or natural tempered pozzolan particles should have a d90 < 250 µm, preferably a d90 < 200 µm and most preferred a d90 < 150 µm.

The amounts of slag and natural pozzolan and/or natural tempered pozzolan in the aluminosilicate precursor range from 10 to 50 wt.-% slag and from 50 to 90 % natural pozzolan and/or natural tempered pozzolan, preferably from 15 to 40 wt.-% slag and from 60 to 85 wt.-% natural pozzolan and/or natural tempered pozzolan and most preferred from 15 to 25 wt.-% slag and from 75 to 85 wt.-% natural pozzolan and/or natural tempered pozzolan. Of course, the sum of all components in one composition is always 100 wt.-%. Thus, if the aluminosilicate precursor consists of slag(s) and natural pozzolan(s) and/or natural tempered pozzolan(s) their amounts add up to 100 wt.-%. If other components are present, their sum is lower.

Suitable other components of the aluminosilicate precursor are all natural and synthetic materials that provide silica and alumina in amorphous form, so that the dissolution in alkaline environment and subsequent formation of the three-dimensional network can take place. Preferably, the additional silica and alumina source is one or more of fly ashes, which can be siliceous or calcareous; ground granulated blast furnace slag and other slags containing alumina and silica glassy phase; clays, especially kaolinitic clays and metakaolin; silica dust; rice husk ash; trass; carbonated recycled cement paste, and red mud. The amount of one or more further components of the aluminosilicate precursor is preferably ≤ 40 wt.-%, more preferred ≤ 30 wt.-% or ≤ 20 wt.-% or ≤ 15 wt.-% or ≤ 10 wt.-%, most preferred ≤ 5 wt.-%.

The activator has a modulus ≤ 3 and is an alkali silicate or a mixture of an alkali silicate with an alkali hydroxide. An alkali silicate with a higher modulus than 3 can be used when it is used as mixture with an alkali hydroxide so that the modulus of the mixture is reduced to 3 or lower. The alkali silicate is usually provided as solution, typically as aqueous solution but other solvents are also possible. The alkali cation is preferably sodium, potassium or lithium, most preferably potassium. Mixtures of alkali silicates can be used. In the case of mixtures comprising alkali silicate and alkali hydroxide the alkali cation is, independently for the two, also preferably sodium, potassium or lithium, most preferably potassium. Both the alkali silicate and the alkali hydroxide can be used in the form of mixtures. It is further preferred to adjust a modulus (molar ratio SiO₂/M₂O, where M is the alkali cation(s)) of at most 3.0, more preferred at most 2.5 and most preferred from 1.0 to 2.0.

Useful alkali activated binders typically comprise from 60 to 99 wt.-% aluminosilicate precursor and from 1 to 40 wt.-% activator, preferably from 65 to 95 wt.-% aluminosilicate precursor and from 5 to 35 wt.-% activator, and most preferred from 70 to 90 wt.-% aluminosilicate precursor and from 10 to 30 wt.-% activator, all with respect to the total binder weight and only taking into account the solid content in case of an activator solution.

Manufacturing the AAB comprises blending of the aluminosilicate precursor components and providing the activator. The aluminosilicate precursor components can be blended in any manner known per se. If more than one slag and/or more than one P and/or Q are used, the order of mixing is arbitrary. With other words, one can either first mix the different slags and/or different P and/or Q and then blend them to provide the aluminosilicate precursor, or blend them in any order with each other. The activator can be premixed with the aluminosilicate precursor (or any of its components) when it is a dry material. In the case of an activator solution the activator has to be kept separate from the aluminosilicate precursor (components) until use. The AAB is obtained by providing the aluminosilicate precursor and the activator as separate components in this case.

Use of the AAB for manufacturing precast concrete elements as well as the method for manufacturing them both start with manufacturing/providing the AAB as described. At least aggregate and water are provided in addition and a concrete is made by mixing them with the AAB. Usually, dry components are mixed with each other first and the water - if applicable comprising the activator solution or mixed with it - is then added. The known devices and mixing procedures are useful for AAB according to the invention. Amount and kind of aggregate as well as the water-solids weight ratio are adapted to the intended use and to the required properties as is also known in the art. This also applies to the ratio aluminosilicate precursor to activator. Within the ranges described herein the optimum ratio can easily be determined with a few samples.

The concrete may contain further components, such as but not limited to additives like pigments, fillers, and fibres, as desired for the specific precast concrete element. Unlike Portland cement (OPC) and composite cements from OPC the range of admixtures useful in alkali activated binders is limited. However, known admixtures for AAB can be used in their known amounts. Successfully used admixtures are for example described in EP 3 296 278 A1 and the references cited therein.

The concrete is filled into a mold and left therein to harden. Reinforcement can be placed into the mold before filling in the concrete. Usually, several hours, like 4 (80°C) or 12 (60°C) hours (dependent on temperature treatment), up to 1 (20°C) or 2 days are required until the precast concrete element has gained enough green strength to be demolded.

For precast concrete elements, temperature treatment of concrete or mortar elements can help to accelerate early strength and facilitate demolding of the material at short intervals. According to the invention the filled in concrete is preferably hardened at a temperature from ≥ 40 °C to 80 °C for about 24 h. Generally, it is advantageous to store the concrete made with the AAB according to the invention immediately after mixing and filling into the mold at temperatures ranging from 20 to 100 °C, more preferred from 20 to 80 °C and most preferred from 40 to 80 °C. A storage at a temperature above ambient temperature is typically beneficial for 1 to 36 h, preferably it takes place for 12 to 24 h, most preferred for about 24 h.

The flow spread measured as mortar flow spread according to DIN EN 413-2 should be enough to bring the material into the mold, suitable spread values are A0 > 120 mm, preferably A0 > 140 mm, most preferred A0 > 160 mm.

The cast material should preferably be demoldable after 24 h and allow a fast processing, however, it should not set immediately when mixed. Typically, suitable setting times range from 5 minutes to 5 hours, preferably from 5 minutes to 4 hours, most preferred from 10 minutes to 3 hours.

Sufficient early strength is very important. The compressive strength after 1 day is usually at least 3 MPa, more preferred at least 4 MPa, most preferred at least 5 MPa when hardening takes place at ambient temperature, e.g. at 20°C. The compressive strength after 1 day is typically at least 10 MPa, more preferred at least 20 MPa, most preferred at least 25 MPa when hardening takes place at 40°- 60 °C. The compressive strength after 1 day is usually at least 30 MPa, more preferred at least 40 MPa, most preferred at least 50 MPa when hardening takes place at > 60 °C.

Further, the binder according to the invention or obtainable according to the invention can be used to manufacture construction chemical products like tile adhesive and screed as building material. The specific composition of such products is normally internal knowhow of the producer. It is expected that some adaptation of the composition is needed. However, this can easily be accomplished by one of ordinary skill in the art.

The invention will be illustrated further with reference to the examples that follow, without restricting the scope to the specific embodiments described. The invention includes all combinations of described and especially of preferred features that do not exclude each other.

If not otherwise specified any amount in % or parts is by weight and in the case of doubt referring to the total weight of the composition/mixture concerned. A characterization as "approximately", "around" and similar expression in relation to a numerical value means that up to 10 % higher and lower values are included, preferably up to 5 % higher and lower values, and in any case at least up to 1 % higher and lower values, the exact value being the most preferred value or limit. The term "substantially free" means that a particular material is not purposefully added to a composition, and is only present in trace amounts or as an impurity. As used herein, unless indicated otherwise, the term "free from" means that a composition does not comprise a particular material, i.e. the composition comprises 0 weight percent of such material.

### Examples

An industrial BOF-slag, a volcanic pozzolan, sodium hydroxide solution and potassium silicate solution were used to make alkali activated binders according to the invention and for comparison. The chemical composition of the volcanic pozzolan and the BOF-slag as well as their Blaine surface and BET surface are shown in table 1. The phase composition of pozzolan and slag are shown in tables 2 and 3.

**Table 1**

| | volcanic pozzolan | BOF-slag |
|---|---|---|
| loss on ignition at 1050 °C | 0.23 wt.-% | 3.76 wt.-% |
| SiO₂ | 47.40 wt. -% | 10.67 wt.-% |
| Al₂O₃ | 14.00 wt. -% | 1.80 wt.-% |
| TiO₂ | 1.63 wt. -% | 0.70 wt.-% |
| MnO | 0.16 wt.-% | 2.68 wt.-% |
| Fe₂O₃ | 11.76 wt.-% | 29.65 wt.-% |
| CaO | 12.27 wt.-% | 45.71 wt.-% |
| MgO | 9.73 wt.-% | 2.36 wt.-% |
| K₂O | 0.32 wt. -% | 0.01 wt.-% |
| Na₂O | 1.60 wt. -% | 0.00 wt.-% |
| SO₃ | 0.04 wt.-% | 0.12 wt.-% |
| P₂O₅ | 0.16 wt.-% | 1.80 wt.-% |
| total | 99.11 wt.-% | 99.26 wt.-% |
| Blaine | 5680 cm²/g | 4600 cm²/g |
| BET | 2.58 m²/g | 2.88 m²/g |

**Table 2: volcanic pozzolan**

| phase | formula | amount [wt.-%] |
|---|---|---|
| quartz | SiO₂ | 0.2 |
| calcite | CaCO₃ | 1.0 |
| anorthite | Ca(Al₂Si₂O₈) | 1.9 |
| labradorite | (Ca, Na)Al(Si, Al)₃O₈ | 2.5 |
| andesine | (Na, Ca)Al(Si, Al)₃O₈ | 6.9 |
| diopside | CaMgSi₂O₆ | 13.8 |
| augite | (Ca, Mg, Fe)₂Si₂O₆ | 1.2 |
| forsterite_iron | Mg₂SO₄ | 8.0 |
| amorphous | | 64.5 |

**Table 3: BOF-slag**

| phase | formula | amount [wt.-%] |
|---|---|---|
| C₂S (beta) | Ca₂SiO₄ | 15.6 |
| C₂S (alpha) | Ca₂SiO₄ | 7.2 |
| C₂S (total) | Ca₂SiO₄ | 22.8 |
| C₄AF | Ca₂(Al, Fe)₂O₅ | 6.2 |
| free lime | CaO | 6.3 |
| portlandite | Ca(OH)₂ | 3.9 |
| calcite | CaCO₃ | 3.5 |
| kutnahorite | (Ca, Mn)CO₃ | 0.8 |
| akermanite | Ca₂MgSi₂O₇ | 1.1 |
| gehlenite | Ca₂Al₂SiO₇ | 0.4 |
| merwinite | Ca₂Mg(SiO₄)₂ | 1.8 |
| hematite | Fe₂O₃ | 1.0 |
| iron (alpha) | Fe | 0.6 |
| pyrolusite | MnO₂ | 0.4 |
| wuestite | FeO | 9.1 |
| hydroxylapatite | Ca₅(PO₄)₃(OH) | 1.8 |
| srebrodolskite | Ca₂Fe(III)₂O₅ | 16.4 |
| amorphous | | 24.0 |

### Example 1

The binder samples contained 3.0 g aluminosilicate precursor, 4.5 g sand and a water to binder weight ratio of 0.375. The activator provided the water and was potassium silicate solution containing an amount of 23.5 wt.-% activator with respect to the combined amount of activator and aluminosilicate precursor. The samples were mixed by hand according to the following procedure: First, aluminosilicate precursor and quartz sand were mixed for 30 seconds. Then, the activator solution was added and the samples were stirred for 1 minute. Finally, the mixes were poured into a small cup to harden at 20°C. The amounts of BOF-slag and volcanic pozzolan in the blend in wt.-% as well as the observed setting behaviour are listed in table 4.

**Table 4**

| Slag [wt.%] | Pozzolan [wt.%] | setting behaviour |
|---|---|---|
| 100 | 0 | During mixing (fast setting even without activator) |
| 50 | 50 | During mixing |
| 30 | 70 | Immediately after mixing |
| 25 | 75 | Around 30 minutes |
| 20 | 80 | Around 60 minutes |
| 15 | 85 | Around 120 minutes |
| 7.5 | 92.5 | Very slow setting; around 600 minutes |
| 0 | 100 | No hardening even after 2 days |

With 23.5 wt.-% potassium silicate as the activator and the specific slag with 6.3 wt.-% free lime a mass ratio slag:pozzolan from 15:85 to 25:75 was useful, neither slag nor pozzolan could be used alone. With lower free lime contents the setting would take longer. Thus, it is contemplated that slags with lower free lime content can be used in amounts of up to 50 wt.-%. Analogously, higher free lime contents render lower amounts of slag down to 10 wt.-% useful. Depending on other properties and parameters using lower amounts of slag with higher free lime content might be necessary to avoid too fast setting. It is also possible to use set retarding admixtures when the workability is insufficient, i.e. setting time too short. Finally, the specific surface of the used slag can lead to a shift in curing speed. The tests were carried out with a slag with a specific surface area according to Blaine of 4600 cm²/g (see Table 1). The use of a slag with a lower surface area of approx. 3000 cm²/g according to Blaine would allow the use of slag quantities of up to 50 wt.%, as the setting time is delayed. Alternatively, it would then also be possible to use slags with a free lime content of up to 10 % by weight. There is therefore a certain leeway for adjusting the three parameters free lime content, amount of slag and slag fineness.

### Example 2

Mortar tests were made using 220 g aluminosilicate precursor, 330 g sand and a water to binder weight ratio of 0.375. The water was provided as mixture with the activator solution. The samples were mixed in a standard mortar mixer for the production of cement mortar prisms according to EN 196. The activator solution used, the amounts of slag and pozzolan in the blend in wt.-% and the temperature during the first 24 hours storage as well as the strength developed after 1 day, 2 days and 7 days storage at 65 % relative humidity are listed in table 5 (n.m. = not measurable/demoldable). After the first 24 hours hardening continued at ambient temperature, i.e. about 20 °C. Strength was measured according to EN 196-1.

**Table 5**

| activator | slag | pozzolan | tempera ture [°C] | strength [MPa] after | |
|---|---|---|---|---|---|
| | | | | 1 day | 2 days |
| K₂SiO₃ (23.5wt%) (SiO₂/K₂O=1.5) | 25 | 75 | 20 | 5.8 | 13.9 |
| K₂SiO₃ (23.5wt%) (SiO₂/K₂O=1.5) | 20 | 80 | 20 | 4.3 | 12.8 |
| K₂SiO₃ (23.5wt%) (SiO₂/K₂O=1.5) | 15 | 85 | 20 | n.m. | 6.7 |
| K₂SiO₃ (23.5wt%) (SiO₂/K₂O=1.5) | 7.5 | 92.5 | 20 | n.m. | n.m. |
| K₂SiO₃ (23.5wt%) (SiO₂/K₂O=1.5) | 25 | 75 | 60 | 56.4 | 51.6 |
| K₂SiO₃ (23.5wt%) (SiO₂/K₂O=1.5) | 20 | 80 | 60 | 56.3 | 52.6 |
| K₂SiO₃ (23.5wt%) (SiO₂/K₂O=1.5) | 15 | 85 | 60 | 59.7 | 51.0 |
| K₂SiO₃ (10.0wt%) (SiO₂/K₂O=1.5) | 15 | 85 | 60 | 26.9 | 27.7 |
| K₂SiO₃ (10.0wt%) (SiO₂/K₂O=2.8) | 15 | 85 | 60 | 13.3 | 14.9 |
| K₂SiO₃ (23.5wt%) (SiO₂/K₂O=3.4) | 15 | 85 | 60 | n.m. | n.m. |
| K₂SiO₃ (10.0wt%) (SiO₂/K₂O=3.4) | 15 | 85 | 60 | n.m. | n.m. |
| K₂SiO₃ (23.5wt%) (SiO₂/K₂O=1.5) | 25 | 75 | 80 | 115.8 | 111.6 |
| K₂SiO₃ (23.5wt%) (SiO₂/K₂O=1.5) | 20 | 80 | 80 | 132.7 | 107.1 |
| K₂SiO₃ (23.5wt%) (SiO₂/K₂O=1.5) | 15 | 85 | 80 | 114.8 | 113.2 |
| NaOH (11.75wt%) | 20 | 80 | 20 | n.m. | n.m. |
| NaOH (23.5wt%) | 20 | 80 | 20 | n.m. | n.m. |
| Na₂SiO₃ (23.5wt%) (SiO₂/Na₂O=3.8) | 20 | 80 | 20 | n.m. | n.m. |
| Na₂SiO₃ (23.5wt%) (SiO₂/Na₂O=1.7) | 20 | 80 | 20 | Not workable; like rubber | |

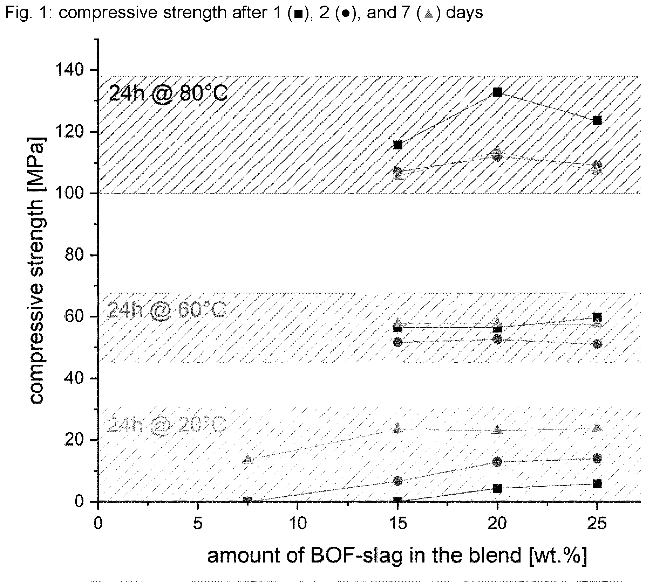

The measured strength of the samples with 23.5 wt.-% K₂SiO₃ having a modulus of 1.5 as activator is also illustrated in figure 1. From the results it is readily apparent, that adding too much of the specific BOF-slag with 6.3 wt.-% free lime resulted in a material that could not be processed due to fast setting. Adding too little BOF-slag with the specific amorphous content of 24 wt.-% and free lime content of 6.3 wt.-% greatly reduced the strength developed after 1 and 2 days. The use of an alkali hydroxide alone did not lead to a measurable early strength even after 2 days, the samples were not demoldable. Alkali silicate solutions have an advantage over the frequently used alkali hydroxide solutions. Due to metasilicates in the silicate solution, the pH value of alkali silicate solutions is often buffered so that a higher available alkalinity can be achieved at the same pH value. An additional silicate species also reacts with the calcium from the slag and leads to dense C-A-S-H phases that are formed. The composition of the activator has a significant effect on the hydration kinetics of the geopolymer materials. Especially with difficult-to-activate raw materials, the choice of activator therefore becomes more important. The use of an alkali silicate increases the rate of the geopolymerization reaction compared to the use of NaOH alone. With regard to the sodium silicate a high modulus, i.e. > 3, resulted in no measurable compressive strength even after 2 days. The sample with lower modulus was not workable due to the extremely high viscosity of the activator (common for low modulus sodium silicates). So it is clear that a higher water amount is necessary or more preferable a superplasticizer addition would help. An increase in the modulus above 3 leads to a significant decrease in strength and workability (mortar spread flow was < 120 mm) for both potassium and sodium silicates.

## Claims

1. Alkali activated binder comprising an aluminosilicate precursor and an activator, wherein the aluminosilicate precursor comprises a blend comprising from 10 to 50 wt.-% of a slag, which has an X-ray amorphous content below 50 wt.-% and a free lime content from 1 to 10 wt.-% with respect to the slag, and from 50 to 90 wt.-% of a natural pozzolan and/or a natural tempered pozzolan, which has an amorphous content of at least 30 wt.-% with respect to the natural pozzolan and/or natural tempered pozzolan, and the activator is an alkali silicate or a mixture of an alkali silicate and an alkali hydroxide and has a modulus of ≤ 3.

2. Alkali activated binder according to claim 1, wherein the alkali activated binder comprises from 60 to 99 wt.-% aluminosilicate precursor and from 1 to 40 wt.-% activator, preferably from 65 to 95 wt.-% aluminosilicate precursor and from 5 to 35 wt.-% activator, and most preferred from 70 to 90 wt.-% aluminosilicate precursor and from 10 to 30 wt.-% activator, all with respect to the total binder weight.

3. Alkali activated binder according to claim 1 or 2, wherein the aluminosilicate precursor comprises from 15 to 40 wt.-% slag and from 60 to 85 wt.-% natural pozzolan and/or natural tempered pozzolan, preferably from 15 to 25 wt.-% slag and from 75 to 85 wt.-% natural pozzolan and/or natural tempered pozzolan.

4. Alkali activated binder according to any one of claims 1 to 3, wherein the slag has a free lime content from 3 to 8 wt.-%, preferably from 5 to 7 wt.-% with respect to the total slag weight; and/or an amorphous content below 40 wt.-% preferably below 30 wt.-% with respect to the total slag weight; and/or a particle size distribution of the slag particles has a d90 < 250 µm, preferably a d90 < 200 µm and most preferred a d90 < 150 µm.

5. Alkali activated binder according to any one of claims 1 to 4, wherein the X-ray amorphous content of the natural pozzolan and/or natural tempered pozzolan is > 45 wt.-%, preferably > 60 wt.-%, with respect to the total pozzolan weight, and/or the particle size distribution of the natural pozzolan and/or natural tempered pozzolan particles has a d90 < 250 µm, preferably a d90 < 200 µm and most preferred a d90 < 150 µm.

6. Alkali activated binder according to any one of claims 1 to 5, wherein the slag is BOF-slag and/or the natural pozzolan is an ash of volcanic origin.

7. Alkali activated binder according to any one of claims 1 to 6, wherein the activator is lithium, sodium or potassium silicate, preferably potassium silicate, or a mixture of lithium, sodium or potassium silicate, preferably potassium silicate, with lithium, sodium or potassium hydroxide, preferably with a modulus ≤ 3.0, more preferred ≤ 2.5, most preferred from 1.0 to 2.0.

8. Method for manufacturing an alkali activated binder comprising an aluminosilicate precursor and an activator, wherein the method comprises the steps of
providing the alumino silicate precursor by blending of from 10 to 50 wt.-% of a slag, which has an X-ray amorphous content below 50 wt.-% and a free lime content from 1 to 10 wt.-% with respect to the slag, and from 50 to 90 wt.-% of a natural pozzolan and/or a natural tempered pozzolan, which has an amorphous content of at least 30 wt.-% with respect to the natural pozzolan and/or natural tempered pozzolan, and
providing an alkali silicate or a mixture of an alkali silicate and an alkali hydroxide with a modulus ≤ 3 as the activator.

9. Use of an alkali activated binder comprising an aluminosilicate precursor and an activator, wherein the aluminosilicate precursor comprises a blend comprising from 10 to 50 wt.-% of a slag, which has an X-ray amorphous content below 50 wt.-% and a free lime content from 1 to 10 wt.-% with respect to the slag, and from 50 to 90 wt.-% of a natural pozzolan and/or a natural tempered pozzolan, which has an amorphous content of at least 30 wt.-% with respect to the natural pozzolan and/or natural tempered pozzolan, and the activator has a modulus ≤ 3 and is an alkali silicate or a mixture of an alkali silicate and an alkali hydroxide, for manufacturing precast concrete elements wherein the alkali activated binder is mixed with aggregate and water to form a concrete, the concrete is filled into a mold where it hardens to form the precast concrete element and the precast concrete element is demolded.

10. Method for manufacturing precast concrete elements comprising providing an alkali activated binder comprising an aluminosilicate precursor and an activator, wherein the aluminosilicate precursor is obtained by blending of from 10 to 50 wt.-% of a slag, which has an X-ray amorphous content below 50 wt.-% and a free lime content from 1 to 10 wt.-% with respect to the slag, and from 50 to 90 wt.-% of a natural pozzolan and/or a natural tempered pozzolan, which has an amorphous content of at least 30 wt.-% with respect to the natural pozzolan and/or natural tempered pozzolan, and the activator has a modulus ≤ 3 and is an alkali silicate or a mixture of an alkali silicate and an alkali hydroxide, mixing the alkali activated binder with aggregate and water to form a concrete, filling the concrete into a mold where it hardens to form the precast concrete element and demolding the precast concrete element.

11. Use according to claim 9 or method according to claim 10, wherein the concrete filled into the mold is stored at a temperature ranging from 20 to 100 °C, preferably from 20 to 80 °C, most preferred from 40 to 80 °C, during hardening or during the first 1 to 36 hours or 12 to 24 hours of hardening.

12. Use according to claim 9 or 11 or method according to claim 10 or 11, wherein the alkali activated binder is an alkali activated binder according to any one of claims 1 to 7.
